# EUROPEAN PATENT APPLICATION

(11) **EP 1 804 450 A1**
(43) Date of publication of application: **04.07.2007**
(21) Application number: 05078051.9
(22) Date of filing: 30.12.2005
(51) Int. Cl.: H04L 27/26

(54) **Allocating data in a multi-carrier digital subscriber line system**

(71) Applicant: STMicroelectronics Belgium N.V., 1930 Zaventem (BE)
(72) Inventor: Janssens, Erik, 3150 Haacht (BE)
(74) Representative: Bird, William Edward

(57) **Abstract**

A digital subscriber line system uses a multi-carrier transmission scheme in which a set of carriers are distributed across a frequency range. Transceiver units (12,61) are connected to each end of a line (31). The transceiver units (12,61), allocate data only to a sub-set of the total set of carriers (150) used by the transmission scheme and disable the unused carriers (160). The sub-set of carriers are positioned at the high frequency end of the frequency range. Reduced use of the lower frequency carriers reduces cross-talk in this band, improving Signal-to-noise ratio (SNR) and reach for other transceiver units.

## Description

### FIELD OF THE INVENTION

This invention relates to allocating data in telecommunications system using multi-carrier signals such as a multi-carrier digital subscriber line system, a transceiver for use in the system, a controller for use in the transceiver, and software for implementing the method.

### BACKGROUND TO THE INVENTION

A high demand for high bandwidth multimedia services and home-working has fuelled improvements to local access networks for communications subscribers. Cable television operators have deployed Hybrid Fibre-coax (HFC) distribution networks which deliver video services and support bi-directional data to cable modems at subscriber premises. Traditional telecommunications operators have deployed Digital Subscriber Line (DSL) technology to carry data at high bit rates over their existing twisted-pair subscriber loops. DSL technology, such as Asymmetric Digital Subscriber Line (ADSL), VDSL, HDSL, HDSL2 (the DSL family is often known as xDSL) uses digital multi-carrier modulation schemes such as Discrete Multitone Modulation (DMT) together with digital signal processing techniques at the transmitter and receiver. For example, DSL technology is described in "ADSL & DSL Technologies", 2nd Ed., W. J. Goralski; Osborne/McGraw Hill, 2002 and "ADSL, VDSL, and Multicarrier Modulation", J. C. Bingham; Wiley, 2000.

One of the primary limitations of legacy twisted pair access networks is cross-talk. Unlike coaxial cables, twisted pairs are unshielded and signals passing along a first cable are prone to leaking into other cables lying alongside that first cable. Crosstalk is a particular problem on long cable runs, which already suffer from a lower signal to noise ratio (SNR).

### SUMMARY OF THE INVENTION

An object of the present invention is to provide improved method and apparatus for the operation of a telecommunication system using multi-carrier signals. The telecommunication system can be an access network which supports multiple digital subscriber line users.

A first aspect of the present invention provides a method of allocating data at a transceiver of a telecommunications system such as a digital subscriber line system, the system using a multi-carrier transmission scheme in which a set of carriers are distributed across a frequency range, the method comprising:
allocating data only to a sub-set of the total set of carriers used by the transmission scheme and disabling at least some of the unused carriers.

The allocation of the data is preferably done in a way to reduce the crosstalk on lower tones. For this purpose, the highest tomes can be used for the allocation of data. In this respect the invention relates to preferentially allocating data towards higher tones. The main reason for mainly using the highest tones is to reduce cross-talk on the lower tones, which then has the effect of increasing the coverage of the network for a certain fixed bitrate. The longest channels or loops will then be able to achieve a higher bitrate.

Methods according to the present invention take a property of the system into account, which is the cross-talk, when making bit allocations. In one aspect it selects a subset of the tones to reduce the overall crosstalk, while still fulfilling the other requirements like requested bitrate and noise margin. Preferably, a method according to the present invention allocates data only to a sub-set of carriers at one end (such as the high frequency end) of the frequency range, and disables (turns off) unused carriers at the other end (such as the low frequency end) of the frequency range. In embodiments bits are allocated on the highest tones. In accordance with some embodiments of the present invention all bits can be allocated on the highest possible tones. However, in other embodiments some lower tones can also be used, e.g. to have some spare tones for bit swapping, or to have some more noise margin.

Accordingly, methods according to the present invention allocate, partly or fully, the bits on the highest tones, with the intention to disable lower tones and to reduce crosstalk on the lower tones towards neighbouring lines.

For a digital subscriber line system, the total bitrate for a broadband connection is typically limited by the telco, which configures equipment, e.g. a DSLAM or ATU-C equipment, with bitrate constraints, e.g. only bitrates lower then 1Mbps could allowed. The "requested bitrate" is actually a number which the ATU-R selects based on the constraints which it gets from the ATU-C during the training process. This number can be one of the inputs for the bit allocation algorithm according to the present invention and/or the SNR per tone. Generally the total bit rate cannot be influenced by a user. However, the transceiver units at each end of the connection have some degree of freedom to distribute the requested bit load over the different tones used by the system and this is used by the present invention. This method of allocating data has an advantage of reducing cross-talk between neighboring lines at lower tones. Preferably, the method according to the present invention should ensure that some or all of the transceiver units positioned within a short distance of the Central Office will allocate their data bits on the highest frequency tones. Optionally, transceiver units can use the tones at the lower end of the frequency range in special circumstances, e.g. in situations where the signal to noise ratio (SNR) is poor or where a user requests a high data rate which requires the full set of tones to be used. Further, at high bitrates a framing limitation can be of importance. For example, for an ADSL equipment in fast mode, this framing limitation is at 8.128Mbps downstream. It could be that on short loops this framing limitation is more restrictive than the maximum bitrate achievable on that line. In that case not all tones need to be used, even if the there is no bitrate limitation configured. In cases like ADSL interleaved mode downstream, ADSL2 downstream, ADSL2+ downstream, any upstream, the full set of tones may have to be used in some circumstances.

Because many transceiver units in accordance with the present invention only use tones at the highest end of the frequency range, the transceiver units that are positioned far from the Central Office will benefit from a reduction in the cross-talk on the lower frequency tones and hence an improved SNR for these tones. As these transceiver units rely on the lower frequency tones to achieve their bit rate, a net increase in the bit rate will be seen, or the network will have a higher reach for the same bit rate. The reduction in cross-talk between lines will allow users positioned outside the conventional coverage area to be served.

Implementing this method of allocating data at each transceiver unit avoids the need for a complicated bit allocation control mechanism at the Central Office, and avoids the need for a database at the Central Office to optimize the spectrum per connection.

This method can be applied to the upstream (Subscriber to Central Office) or to the downstream (Central Office to Subscriber) direction of communication.

The functionality described here can be implemented in software (e.g. instructions controlling a general purpose microcontroller), hardware or a combination of these. Accordingly, another aspect of the invention provides software for controlling operation of a transceiver unit. The software may be installed on the transceiver unit at the time of manufacture or commissioning, or it may be installed onto an existing transceiver unit at a later date as an upgrade. The software may be stored on an electronic memory device, hard disk, optical disk or other machine-readable storage medium. The software may be delivered as a computer program product on a machine-readable carrier or it may be downloaded directly to the transceiver unit via a network.

Further aspects of the invention provide a transceiver unit for implementing the method, a digital subscriber line system, a signal and a method of offering a data service.

### BRIEF DESCRIPTION OF THE DRAWINGS

Embodiments of the invention will be described with reference to the accompanying drawings in which:
Figure 1 shows a digital subscriber line (DSL) system in which the invention can be applied;
Figure 2a shows conventional power and bit distributions across carriers of a multi-carrier transmission scheme such as ASDL;
Fig. 2b shows conventional power and bit distributions across carriers of a multi-carrier transmission scheme such as ASDL allowing for SNR degradation,
Figure 3 shows a set of carriers used in the multi-carrier transmission scheme;
Figure 4 shows a flow chart of a method of allocating data in accordance with an embodiment of the invention;
Figure 5a shows power and bit distributions across carriers of a multi-carrier transmission scheme in accordance with an embodiment of the invention;
Fig. 5b shows power and bit distributions across carriers of a multi-carrier transmission scheme in accordance with an embodiment of the invention allowing for SNR degradation, and,
Figure 6 shows a transceiver unit for implementing the invention.

### DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention is mainly useful for wideband telephone connections such as multi-carrier systems including xDSL. A non-limiting list of suitable protocols that can be used with the present invention is: ADSL (ITU-T G992.1 and amendments, ITU-T G992.2 and amendments, ANSI T1.413), ADSL2 (ITU-T G992.3 and amendments, ITU-T G992.4), ADSL2+ (ITU-T G992.5 and amendments), VDSL (ITU-T G993.1), VDSL2. However the present invention is not limited to telephone systems and can be applied to any multi-carrier system.

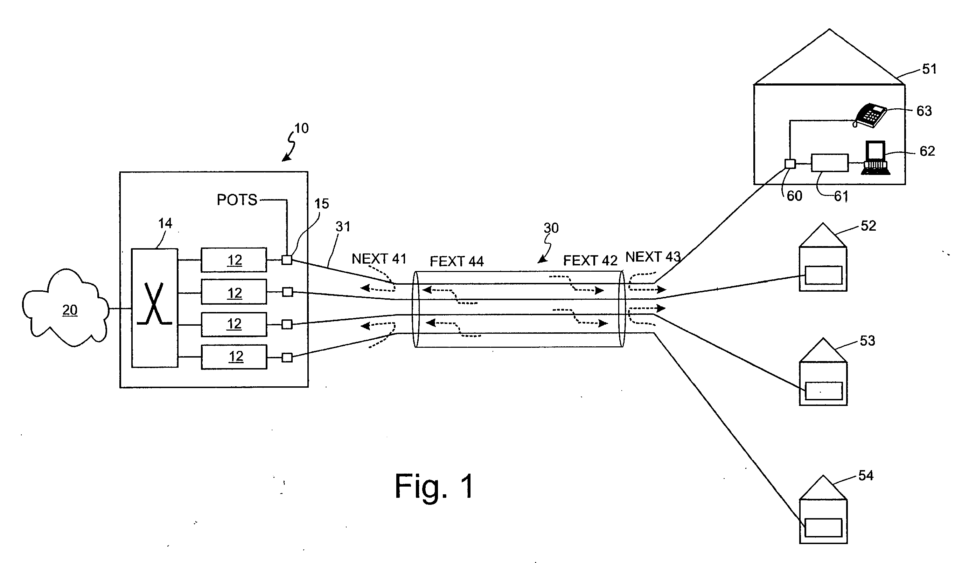

Figure 1 shows a telecommunications local access network with a central office (exchange) 10 connecting to a number of subscriber premises 51-54. Each subscriber premises 51-54 is connected to the central office 10 by an individual transmission cable 31. Typically the transmission cables 31 are unshielded copper twisted-pair wires. For a major part of the run the cables will form part of a cable bundle 30. It is the close physical spacing of cables 31 in bundle 30 which causes the most significant cross-talk problems. While precautions can be taken to minimise cross-talk, such as by randomly rearranging the order of wire sets along the length of bundle 30, cross-talk cannot be eliminated. A path between exchange 10 and subscriber premises 51-54 may be formed by several such bundles 30. The main causes of cross-talk are shown in Figure 1. The two main forms of cross-talk are near-end cross-talk (NEXT) and far-end cross-talk (FEXT). NEXT occurs where a high-level transmitted signal is injected into a first cable, leaks into an adjacent cable, and is picked-up at the adjacent cable's receiver located at the end of the cable which is local to the source transmitter. NEXT 41, 43 occurs at both ends of a cabled system, as shown in Figure 1. FEXT occurs where a transmitted signal, injected into a first cable, leaks into an adjacent cable and is picked up at the adjacent cable's receiver located remote from the source transmitter. The level of FEXT increases with the length of a cable run and can limit the reach of a system.

Central Office 10 includes a rack of ADSL modems, known as ADSL Transceiver Unit - Central Office (ATU-C). In the downstream direction (central office to subscriber) the ATU-C converts data into the DMT form whereas in the upstream direction (subscriber to central office) the ATU-C receives DMT modulated data and converts this from DMT into a form for onward transmission. The ATU-C's (or DSLAMs) can be located in other positions of the network, e.g. closer to the subscriber than the Cebtral Office. The position of the ATU-C or DSLAM is not considered a limitation on the present invention.

The ATU-C can include an addressing function which assigns an address to a subscriber, e.g. chosen from a pool of addresses, for the duration of a connection. The address may be an IP address. ADSL equipment typically interfaces with other equipment using ATM interfaces. This means that if an end-user is transmitting IP packets, they will be embedded in ATM packets and transmitted over the ADSL line. There are however different combinations possible: ADSL equipment can have ATM, PTM or STM interfaces and the packets that are handled at this interfaces may embed Ethernet packets (which contain IP packets) or they may directly contain IP packets. STM stands for synchronous transfer mode and originates from the initial goals of ADSL (before 1997) to handle Video on Demand, (see: Bingham, John A.C. "ADSL, VDSL, and Multicarrier Modulation"). ATM stands for asynchronous transfer mode and is the current de facto standard for ADSL equipment. ATM and STM are referenced in the ITU G992.1 standard ('ADSL'). PTM stands for packet transfer mode, which is a type of interfacing which is referenced in the ITU G992.3 and G992.5 ('ÁDSL2' and 'ADSL2+'). The goal of this interface is to eliminate the ATM overhead and have an interface which is more suited for handling IP or Ethernet packets.

Data traffic is carried in the form of packets and a router 14 routes data packets between the ATU-C equipments 12 and an external network 20 according to information in packet headers. In this type of system a conventional POTS (Plain Old Telephone Service) service is provided simultaneously with an ADSL service. POTS operates within the baseband part of the spectrum while ADSL operates within a higher frequency band of 25kHz - 1.1MHz. A splitter 15, 60 at each end of each cable 31 ensures that POTS signals and ADSL signals are correctly separated.

Each premises subscribing to the ADSL service includes the equipment shown at premises 51. A twisted pair cable is fed to a splitter 60 which separates the ADSL traffic from the POTS traffic. POTS traffic is passed to conventional telephones 63, fax machines etc. while ADSL traffic is passed to an ADSL modem known as an ADSL Transceiver Unit - Remote terminal (ATU-R). This has similar functions to the ATU-C, and converts data traffic into a format which can be passed to a personal computer or other data device within premises 51. ATU-R 61 may form the hub of a wireless network within premises 51 serving multiple data devices. In a variant of ADSL known as ADSL-Lite the splitters may be omitted.

In a known manner, when a user wishes to establish an ADSL connection ATU-C and ATU-R modems at each end of cable 31 begin a training process in which the characteristics of the line are examined. The start-up procedure comprises:
- detecting the presence of a remote modem. At startup, the modem is in an infinite detection loop and remains there until it senses the presence of a remote modem;
- a handshake process, as set out in ITU-T G.994.1. The ATU-C and ATU-R exchange their capabilities;
- a training process in which the ATU-C and ATU-R determine what signal to noise ratio (SNR) exists and what data rate can be supported;
- showtime. The showtime is the state where the actual data transfer is made. The modem remains in this state unless an unrecoverable error occurs or until the modem receives a command from a management entity to end the transmission.

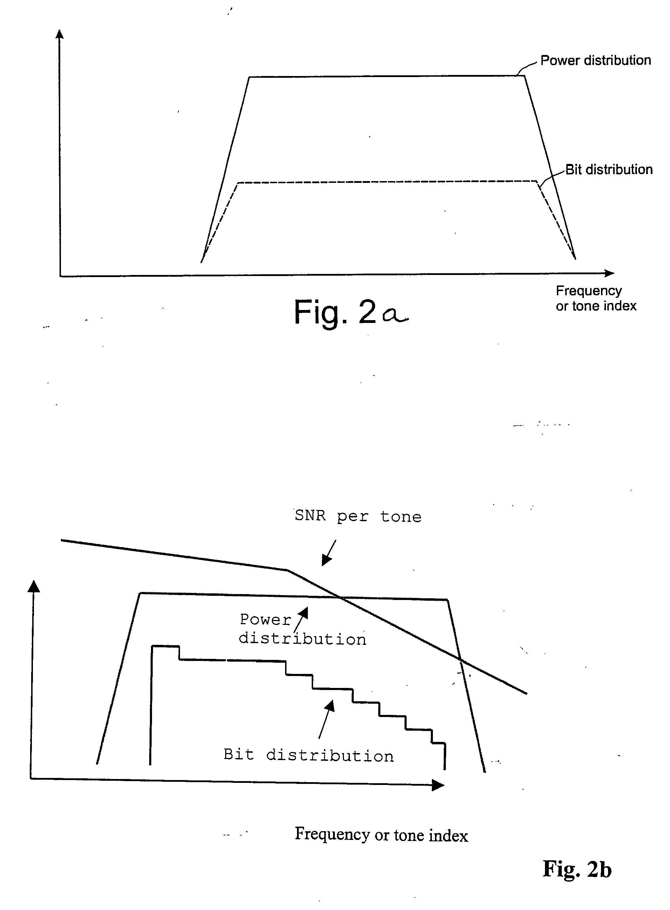

Conventionally, in the training process ATU-R modems calculate the power and bit-allocation in the receive band to optimize their local noise margins (assuming the bit rate is fixed and specified by the ATU-C) and thus they exhibit a power hogging behaviour. As shown in Figure 2a, an ATU-R will distribute data across the full range of frequency carriers, at as high a power as possible, to maximise received SNR. The effect of this distribution on neighboring modems (via cross-talk) is not taken into account.

Fig. 2a shows a conventional perfectly flat power and bit allocation. Power distribution is usually rather flat, e.g. the power per-tone may vary by a few dB's but the average value should be equal to the nominal PSD as indicated in the relevant ADSL standard documents. The bit allocation in Fig. 2a is flat but in practice it can be shaped by the SNR as shown schematically in Fig. 2b. In this case, the higher the SNR per tone, the more bits will be allocated to it.

A Discrete Multitone (DMT) ADSL system divides the usable spectrum into multiple channels, each channel being represented by a frequency carrier known as a tone. For each tone, the number of bits that will be modulated on to that tone (the `bitloading') is based on the measured signal to noise ratio on that tone and on the total requested bitrate. Figure 4 shows a set of tones 150. An ADSL system typically uses 256 individual tones. In accordance with an embodiment of the invention, a modem allocates data bits on the highest frequency tones possible. Instead of reducing the power per tone, or increasing the margin, all bits are moved to the higher frequency tones, and the lower frequency tones are disabled. The overall power will also be reduced as a result of disabling the lower frequency tones.

The training sequence is standardised in ITU-T G.994.1 ,G.992.1, G.992.3, G.992.5. During the training sequence the modems determine all of the parameters to ensure that they will make optimal usage of the line. As part of this process, the modems determine the bit loading for each carrier (tone) based on a signal to noise ratio measurement of a predetermined test signal.

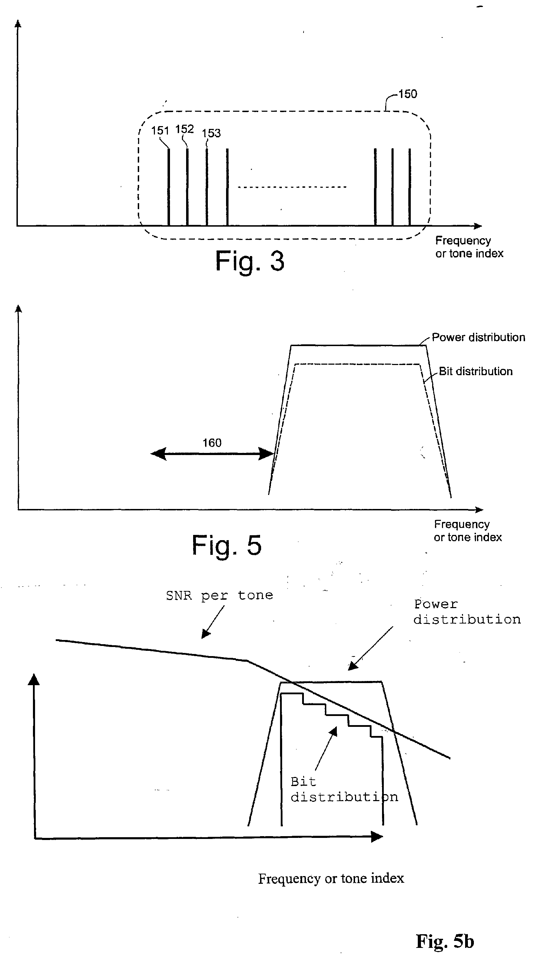

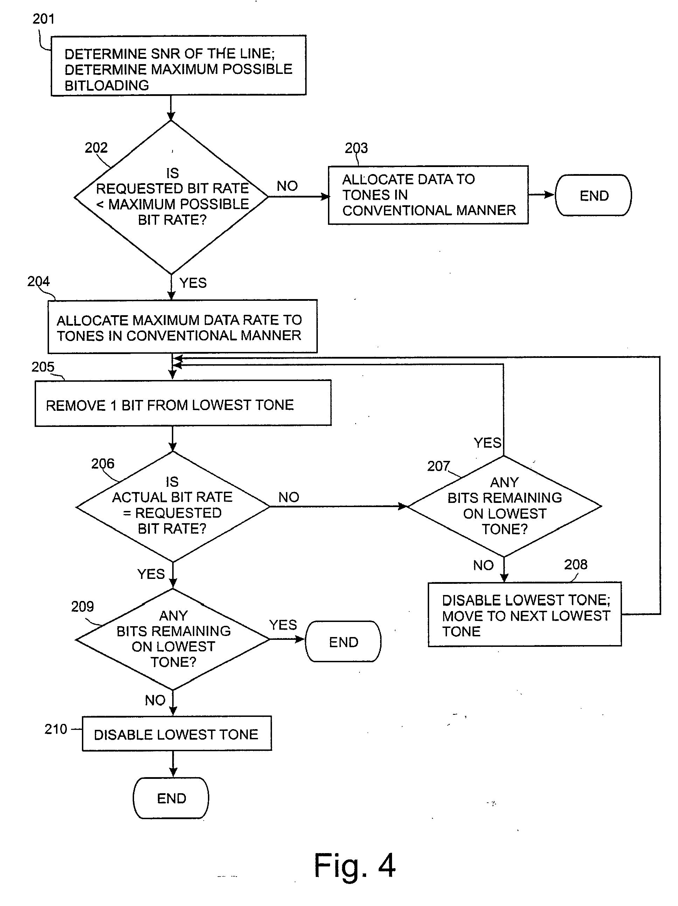

An embodiment of the bit loading scheme is shown in the flow diagram of Figure 4. For this explanation it will be assumed that the method is being performed by a controller within modem 61 (ATU-R). It will be appreciated that the method can be performed by the ATU-R or the ATU-C. Firstly, at step 201, the modem receives the test signal sent by the ATU-C at the other end of the line. The controller determines the SNR of the received test signal across the set of tones. Knowing the SNR of the line, the modem can compute the maximum possible bitloading for the set of tones. The data rate requested by the user of the modem may be less than the data rate that can be carried over the line. At step 202 the modem determines if the requested bitrate is lower the maximum possible bitload computed at step 201. If the user has requested the maximum data rate, then data is allocated to the set of tones in the conventional manner at step 203. Returning to step 202, if the user has requested a bit rate which is less than the maximum data rate, the controller begins a process of removing data from the lower tones. This is an iterative process, removing one bit at a time. The process begins at step 204 by allocating data to the set of tones in the conventional manner. Figure 3 shows an initial set of tones 150 distributed across the ADSL frequency range. Each tone in the set of tones 150 will initially be allocated a number of bits. At step a first bit is removed from the lowest frequency tone. At step 206 a check is made whether the actual bit rate equals the requested bit rate. If the requested bit rate is lower than the actual bit rate (i.e. the current sum of bits allocated across the set of tones) a check is made at step 207 whether the lowest frequency tone has any bits allocated to it. For example, in the initial stages of this method, a check will be made whether tone 151 has any data bits allocated to it. If the lowest frequency tone 151 has no bits allocated to it then it is turned off (disabled) at step 208 and the controller looks at the tone having the next lowest frequency. As the process progresses, tones 152, 153 will, in turn, be the lowest tones with remaining bits. The process repeats the loop through steps 205, and 206 again, removing a bit from the lowest tone and checking whether the requested bit rate has now been met. Returning to step 209, if the actual bit rate equals the requested bit rate, i.e. enough bits have been removed from the set of tones, a check is made whether the removal of the last bit at step 205 left any bits on the lowest frequency tone. If bits remain the process ends and if all bits have been removed from the lowest frequency tone, the lowest frequency tone is turned off and the process ends.

Existing equipment has the freedom to turn off some tones. Any unused tone may contain power (but not bits) or may be turned off. Tones may be turned off by the ATU-C or may be turned off by the ATU-R. In accordance with the present invention the subset of tones, e.g. at the higher tones is selected to improve or maximize the noise margin.

Figure 5a shows the power and bit distributions resulting from the above process. Data bits are now carried by the highest frequency tones and the lower frequency tones which would have occupied region 160 of the frequency spectrum have been turned off.

Fig. 5b shows a bit allocation scheme in accordance with another embodiment of the present invention. In this embodiment the bit allocation profile is shaped by the SNR. In this case, the higher the SNR per tone, the more bits will be allocated to it. The SNR is measured per tone and the number of bits allocated per tone is determined in accordance with the measured SNR. The SNR is a measurable property of a specific tone. If the SNR is large enough it may be possible to transmit data bits on this tone. Theoretically the number of bits = log2 (1 + SNR). When bits are transmitted on a tone, the important number is the noise margin. This number indicates by how many dB the noise may increase before the error rate goes up to an unacceptable level, e.g. 10e-7. When more bits are placed on a tone, the noise sensitivity goes up and the noise margin goes down. The noise margin is roughly:
NoiseMargin = SNR - 2^bits + 1.
Note that this formula is not really correct for a practical system. But roughly it can be seen that as the number of bits goes up the noise margin goes down, up to the point where the number of bits is equal to the theoretical maximum. Then the noise margin becomes zero and if the noise increases beyond this point, errors will occur.

In the methods of the present invention more bits are placed onto the highest tones, compared to a conventional method. This does not now mean that the SNR is lower but rather that the noise margin on the highest tones is lower compared to the noise margin which a conventional method with lower number of bits on the highest tones would have. In accordance with one embodiment of the present invention, the method only removes data bits from the lower tones. This is because it starts from a maximum bit allocation: the total number of bits is higher than required for the requested bitrate and needs to be reduced up to that level. Hence, it is allowed to shut off some of the tones. This algorithm is only an example of how the present invention can be implemented. The present invention includes other ways of achieving the bit allocation for the purpose of cross-talk reduction.

For example 3 methods of bit allocations may be included within the scope of the present invention:
1) bit allocation which results from a conventional method which optimizes the noise margin. In this embodiment data bits are removed from the lower tones towards the higher tones until the total number of bits, i.e. the sum over all tones, is just enough to achieve the requested bitrate.
2) bit allocation which reduces cross-talk with a fixed noise margin. Bits are moved from the lower tones to the upper tones to achieve a fixed noise margin. The total number of bits, i.e. sum over all tones is just enough to achieve the requested bitrate.
3) the maximum bit allocation: here the total number of bits is much higher then the number required for the requested bitrate. In fact this bit allocation generates the highest achievable bitrate on this line. In case the telco has configured the ATU-C to limit the bitrates to a lower value, this maximum bit allocation cannot be used. In this case the number of bits are reduced on lower tones ( no need to add bits to the upper tones as the bit rate is still within the requirements) until exactly the required bitrate is achieved.

All of the above methods differ from a conventional bit allocation method which, e.g. starts from a maximum bit allocation and reduces the number of bits more or less gradually on all tones to optimize the noise margin. The net result in this conventional case is that the noise margin is higher compared to the starting point, but the crosstalk is still the same.

Methods according to the present invention provide bit allocation taking into account the target noise margin. Noise margin is a configuration parameter, selected by the telco and programmed into the ATU-C.

The ADSL standards define a process known as bitswapping where, during showtime, a modification is made to the number of bits carried by each carrier, i.e. a change to the bitloading of the carriers. A receiving terminal can request a change in the bitloading to handle small variations in SNR over time.

The bit allocation algorithm in accordance with the present invention will typically be implemented as software running on the ATU-R or ATU-C. For example, the ATU-R can determine the bit allocation for the downstream tones and the ATU-C can determine the bit allocation for the upstream tones. It's also possible for the ATU-C to force the ATU-R to do the bit allocation in a way to reduce cross-talk.

In the methods of the present invention the used tones can be sent at the nominal power level, same as for the tones transmitted in a conventional system. Less tones are used in accordance with the present invention and therefore the total power is lower. ADSL2-based systems (that includes ADSL2+) are able to reduce the average power levels per tone. This reduces also the crosstalk, but not the same extent as switching off a tone. Accordingly, in accordance with embodiments of the present invention it is preferred to switch of at least some of the lower tones. Conventional techniques reduce cross-talk for all tones, whereas the methods of the present invention reduce cross-talk more effectively by concentrating only on the lower tones, where it is more important for performance on long loops.

The ADSL standards define a process known as bitswapping where, during showtime, a modification is made to the number of bits carried by each carrier, i.e. a change to the bitloading of the carriers. A receiving terminal can request a change in the bitloading to handle small variations in SNR over time. With respect to the bitswap process as implemented with the present invention, the different options can be used, e.g.:
- don't re-enable tones and rely on bitswapping internal to the subset which was originally selected,
- re-enable some tones just below the subset,
- keep some spare tones (e.g. 1 or 2) on which there is power, but no tones. Use these tones to bitswap in case external noise increases,
- implement a less extreme form of the but allocation method described above: i.e. reduce the crosstalk by using mainly the highest tones, but keep some extra margin on top of the target noise margin. In this case, noise may increase by a certain amount (that's an input parameter to this implementation variant of the method) without even the need for bitswaps to keep above the target noise margin.

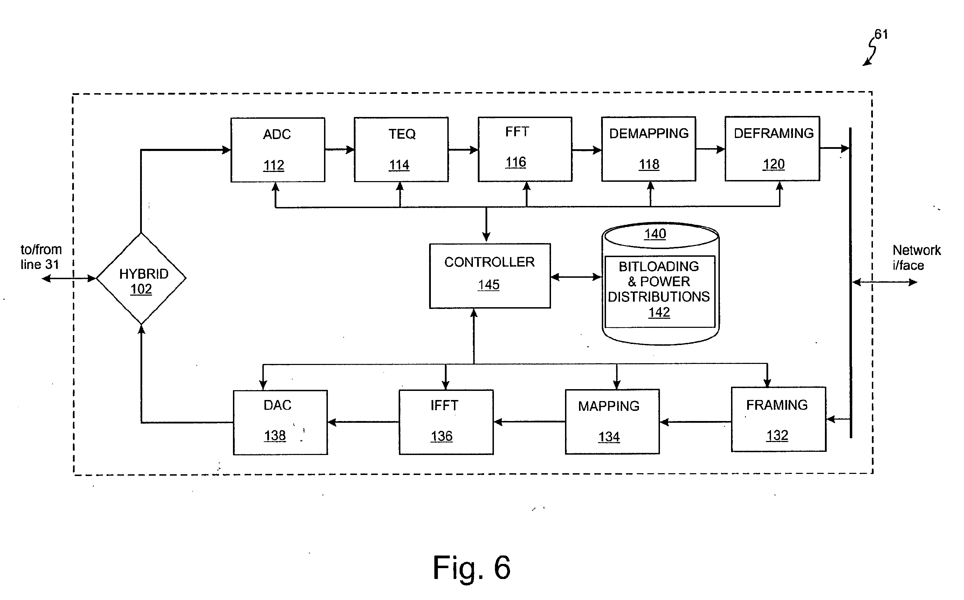

Figure 6 shows a simplified architecture of an ADSL transceiver unit at a subscriber premises (ATU-R). The Central Office (ATU-C) and subscriber (ATU-R) transceiver units have an equivalent architecture. The transceiver unit has a receive path 112-120, a transmit path 132-138. A hybrid circuit 102 couples the transmit and receive paths to the line 31 and a network interface couples data to a data terminal or local area network. The transceiver unit has a controller 145 which co-ordinates operation of the functional blocks within the transmit and receive paths. Typically, this can be implemented with some processing engine capacity, e.g. as a general purpose microcontroller with control instructions stored in a non-volatile memory device 140.

Hybrid circuit 102 comprises a set of components which, in the upstream direction, transmits a signal to the line 31 with the least amount of power echoed to the local receive path while, in the downstream direction, passing a received signal from the line 31 to the receive path with the least amount of attenuation.

The receive path comprises an analogue-to-digital converter 112 which samples the incoming ADSL signal from line 112. A time-domain equalizer (TEQ) 114 reduces inter-symbol interference. A Fast Fourier Transform block 116 converts an ADSL symbol from the time to the frequency domain. It executes the FFT for every ADSL symbol which is received (+/- 250µs). The output of the FFT block 116 is an array of complex numbers, where every complex number represents the complex point that was modulated on a certain tone.

A demapping block 118 extracts the modulated bits from the array of complex numbers. To correctly perform this function, the demapping block 118 needs to know the bitloading: i.e. the number of bits that are modulated on every tone. This bitloading is determined during the training process and agreed by the ATU-C and ATU-R. The power and bitloading distributions agreed during the training process are stored in memory 140 as a data set 142. A deframing block 120 converts the data from the packetised form used across line 31 to a form which is used by the network interface.

The transmit path comprises functional blocks which perform the opposite functions to those just described. A framing block 132 receives, as an input, data from the network interface forms the data into frames used for the ADSL connection. A mapping function 134 maps the data bits onto an array of complex numbers. This mapping function is based on the bitloading agreed between the ATU-C and ATU-R during the training process. The power and bitloading distributions agreed during the training process are stored in memory 140 as a data set 142. An inverse Fast Fourier Transform (IFFT) block 136 converts the complex ADSL symbols from the frequency domain into the time domain to form an output signal. Finally, a digital-to-analogue converter 138 converts the time samples into an analogue signal which is applied to the hybrid circuit 102 for transmission on the line 31.

Where the transceiver unit is implemented in the form of a general purpose microcontroller and software code, this invention can be implemented by updates to the software, without modifications to the hardware devices. Accordingly, the functionality of the present invention can be implemented in software (e.g. instructions controlling a general purpose microcontroller, processing engine or computing system), hardware or a combination of these. Accordingly, another aspect of the invention provides software for controlling operation of a transceiver unit. The software may be installed on the transceiver unit at the time of manufacture or commissioning, or it may be installed onto an existing transceiver unit at a later date as an upgrade. The software may be stored on an electronic memory device, hard disk, optical disk or other machine-readable storage medium. The software may be delivered as a computer program product on a machine-readable carrier or it may be downloaded directly to the transceiver unit via a network.

The invention is not limited to the embodiments described herein, which may be modified or varied without departing from the scope of the invention.

## Claims

1. A method of allocating data at a transceiver of a telecommunications system, the system using a multi-carrier transmission scheme in which data is carried by a set of carriers which are distributed across a frequency range, the method comprising:
allocating data only to a sub-set of the total set of carriers used by the transmission scheme and disabling at least some of the unused carriers, wherein the sub-set of carriers is located at a high frequency end of the frequency range, and the at least some unused frequency carriers are located at a low frequency end of the frequency range.

2. A method according to claim 1 wherein data is allocated to a sub-set of carriers at the high frequency end of the frequency range to thereby reduce cross-talk.

3. A method according to any one of the preceding claims further comprising the steps of:
determining the signal-to-noise ratio (SNR) of a communication channel;
calculating the achievable data rate based on the SNR; and, if a requested data rate is less than the achievable data rate, allocating data in a manner according to any one of the preceding claims.

4. A method according to claim 3 wherein, if the requested data rate is less than the achievable data rate, performing an iterative process of:
removing at least one bit from a bit allocation to the lowest frequency carrier; and,
determining whether the requested bit rate has been met.

5. A method according to claim 4 further comprising checking, after the removal of each said at least one bit, whether any bits remain allocated to the lowest frequency tone and disabling that tone if no bits are allocated to that tone.

6. The method according to any previous claim, further comprising, measuring a signal to noise ratio per tone and allocating data per tone in accordance with the measured signal to noise ratio.

7. The method any previous claim wherein the telecommunications system comprises a digital subscriber line.

8. A controller for a transceiver unit of a telecommunication system, the controller comprising control logic which is operable to perform the method according to any one of the preceding claims.

9. A transceiver unit for a digital subscriber line system comprising a controller according to claim 8.

10. A digital subscriber line system comprising a plurality of subscriber lines each with a transceiver unit at each end of the line, the transceiver units using a multi-carrier transmission scheme in which data is carried by a set of carriers which are distributed across a frequency range, the transceiver units being operable to allocate data only to a sub-set of the total set of carriers at a higher frequency end of the frequency range used by the transmission scheme and to disable at least some of the carriers at a lower end of the frequency range.

11. A method of offering a data service across a communication network comprising a plurality of subscriber lines each with a transceiver unit at each end of the line, the transceiver units using a multi-carrier transmission scheme in which data is carried by a set of carriers which are distributed across a frequency range, the transceiver units being operable to allocate data only to a sub-set of the total set of carriers used by the transmission scheme at a high frequency end of the frequency range and to disable at least some of the carriers at the low frequency end of the frequency range.

12. A multi-carrier data signal for transmission across a communication channel which uses a multi-carrier transmission scheme in which data is carried by a set of carriers which are distributed across a frequency range, the signal comprising a sub-set of the total set of carriers used by the transmission scheme at a high frequency end of the frequency range and not comprising at least some of the carriers at the low frequency end of the frequency range, each used carrier carrying at least one data bit.

13. Instructions for operating a transceiver unit of a telecommunications system, the system using a multi-carrier transmission scheme in which data is carried by a set of carriers which are distributed across a frequency range, the instructions causing the transceiver unit to perform the method according to any one of claims 1 to 7.

14. A machine readable medium carrying the instructions of claim 13.
